# EUROPEAN PATENT APPLICATION

(11) **EP 1 480 447 A2**
(43) Date of publication of application: **24.11.2004**
(21) Application number: 04011973.7
(22) Date of filing: 19.05.2004
(51) Int. Cl.: H04N 3/15

(54) **Image sensor**

(30) Priority: 21.05.2003 JP 2003143648
(71) Applicant: Nissan Motor Co., Ltd., Yokohama-shi, Kanagawa (JP)
(72) Inventor: Throngnumchai, Kraisorn, Yokohama-shi, Kanagawa 236-0052 (JP)
(74) Representative: Grünecker, Kinkeldey, Stockmair & Schwanhäusser Anwaltssozietät

(57) **Abstract**

An image sensor includes: a plurality of pixels 1, 2, ... arranged in a two-dimensional pattern; a Δ Σ-type AD converter 200 provided to be commonly used in conjunction with all the pixels, that executes AD conversion of outputs of the pixels; an address generation circuit which generates address signals used to specify the pixels; and switching circuits 1a, 2a, ... each provided in conjunction with one of the pixels to connect the output of the pixel to the Δ Σ-type AD converter 200 in conformance to an address signal provided by the address generation circuit, and: the address generation circuit sequentially generates addresses in correspondence to a plurality of adjacent pixels during a reset cycle over which an integrator 202 of the Δ Σ-type AD converter 200 is reset once; and the outputs of the pixels corresponding to the addresses generated by the address generation circuit are sequentially input the Δ Σ-type AD converter 200 via the switching circuits 1a, 2a, ....

## Description

The present invention relates to an image sensor that captures an image.

Various types of alarm systems and driving support systems that utilize image processing apparatuses have been proposed to date. The performance requirements for the image sensors employed in these systems vary depending upon the context of the application in which each image sensor is adopted. For instance, the image sensor used in a system that quickly detects an obstacle and issues an alarm needs to be able to detect a high-speed movement such as a vehicle cutting in ahead of the subject vehicle. A high level of spatial resolution must be achieved by providing fine pixels at the image sensor in order to allow the image sensor to detect such high speed movement.

The image sensor in a system that needs to detect a white line on the road from a distance at night is required to achieve high-sensitivity and low-noise performance. In addition, an image sensor used to display images needs to achieve high gradation performance.

However, when an attempt to achieve a higher level of spatial resolution is made by using smaller pixels at an image sensor, both the sensitivity and the gradation performance of the image sensor tend to become lower, to result in an increase in noise in the related art. As a means for striking an optimal balance, i.e., an ideal trade-off between the spatial resolution and the sensitivity/low-noise performance, an image sensor in which a plurality of pixels are coupled to achieve a high level of sensitivity to allow a signal to be read out from the coupled pixels functioning as a single pixel in appearance has been proposed. See Japanese Laid Open Patent Publication No. H09-046596, for instance.

In this image sensor, the signal from each pixel is independently read out when a high level of the spatial resolution is desired, whereas the sum of the signals from two pixels read out when a higher level of sensitivity is desired. Thus, signals can be read out by selecting either the sum mode or the non-sum mode freely, and the two conflicting requirements, i.e., high spatial resolution and high sensitivity/low noise, in an image sensor used in an image processing apparatus are both satisfied.

The image sensor in the related art described above adopts a structure in which the addition of the signals among the pixels is executed and a pattern of pixels to be coupled when executing the addition to calculate the sums is implemented in advance in the hardware. For this reason, while the sum mode or the non-sum mode can be selected freely, the coupling pattern including the number of pixels to be coupled to obtain each sum needs to be determined in advance during the image sensor design stage and once the coupling pattern is set, it cannot be altered during use. However, an image sensor utilized in an automobile that operates in an environment in which the image capturing conditions can change drastically needs to allow the pixel coupling pattern including the number of pixels to be coupled to obtain each sum to be altered flexibly in correspondence to the image-capturing conditions, in addition to allowing the summode or the non-sum mode to be selected freely.

In addition, in automotive applications, the cost of the entire system must be minimized by using the image processing image sensor also as a display image sensor. While no gradation is needed in standard image processing through which an input image is processed after becoming a 1-bit binary image, it has been learned through experience that a higher gradation equivalent to 8 bits or more is required for display. However, the gradation is not variable in the image sensor in the related art described above and thus, even if the sensitivity is improved, an image generated by the image sensor having miniaturized pixels which is good enough for image processing cannot be used for display due to the lack of gradation.

The present invention provides an image sensor that allows the pixel coupling pattern to be altered in a flexible manner and satisfies both the requirements for higher signal read speed and the requirement for higher sensitivity / gradation performance.

According to the present invention, an image sensor comprises: a plurality of pixels arranged in a two-dimensional pattern; a Δ Σ-type AD converter provided to be commonly used in conjunction with all the pixels, that executes AD conversion of outputs of the pixels; an address generation circuit which generates address signals used to specify the pixels; and switching circuits each provided in conjunction with one of the pixels to connect the output of the pixel to the Δ Σ-type AD converter in conformance to an address signal provided by the address generation circuit, and: the address generation circuit sequentially generates addresses in correspondence to a plurality of adjacent pixels during a reset cycle over which an integrator of the Δ Σ-type AD converter is reset once; and the outputs of the pixels corresponding to the addresses generated by the address generation circuit are sequentially input the Δ Σ-type AD converter via the switching circuits.

### BRIEF DESCRIPTION OF THE DRAWINGS

FIG. 1 shows the overall structure adopted in the first embodiment.
FIGS. 2A and 2B show the circuit corresponding to two pixels at the image sensor achieved in the first embodiment and the operation of the circuit.
FIGS. 3A and 3B show the circuit and the operation of an image sensor having a Δ Σ-type AD converter in the related art.
FIGS. 4A and 4B show the structure and the operation of a variation of the first embodiment.
FIGS. 5A and 5B show the structure and the operation of the image sensor achieved in the second embodiment.
FIGS. 6A and 6B show the structure and the operation of the image sensor achieved in the third embodiment.
FIGS. 7A and 7B show the structure and the operation of the image sensor achieved in the fourth embodiment.
FIG. 8 shows an example of a variation of an embodiment achieved by utilizing a Δ Σ-type AD converter having secondary integrators.

### DESCRIPTION OF PREFERRED EMBODIMENTS

### (First Embodiment of the Invention)

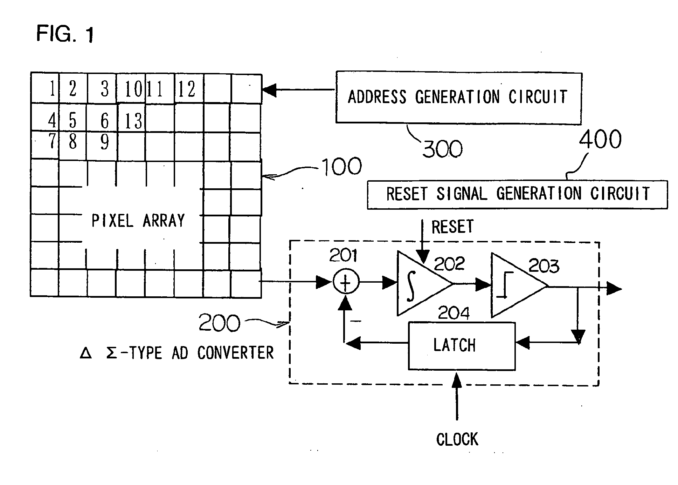

FIG. 1 shows the overall structure adopted in the image sensor in a first embodiment. The image sensor achieved in the first embodiment includes a pixel array 100 having a plurality of pixels 1, 2, ... disposed in a two-dimensional pattern as does a CMOS image sensor. The output of each of the pixels 1, 2, ... is connected to an AD converter 200 via a switch to be detailed later. An address generation circuit 300 generates an address of a pixel from which the output is used to be read and outputs the address thus generated to the pixel array 100. At the pixel array 100, the switch of the corresponding pixel is closed in response to the address signal and thus, the output of the pixel at the specified address is connected to the AD converter 200. A reset signal generation circuit 400 generates a reset signal for the AD converter 200.

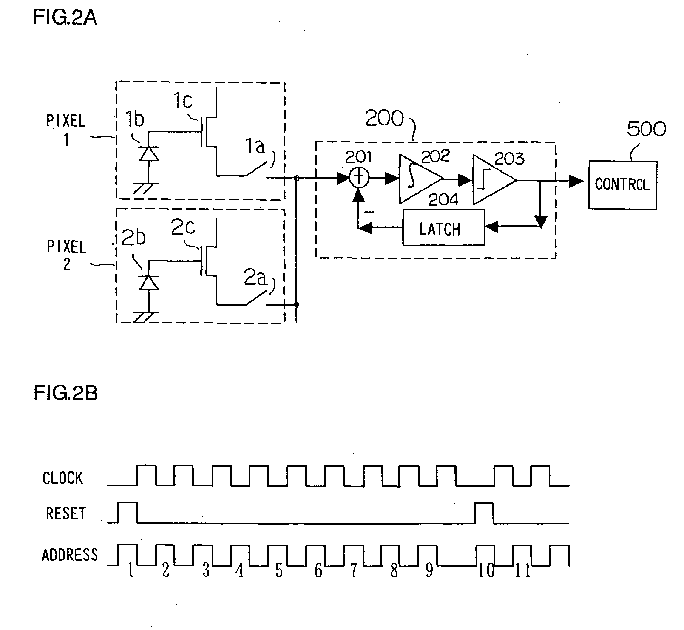

FIGS. 2A and 2B shows a circuit corresponding to two pixels at the image sensor achieved in the first embodiment and the operation of the circuit. It is to be noted that the address generation circuit 300 is not included in the illustration presented in FIG. 2A. In addition, the clock pulse, the reset pulse and the address signal in FIG. 2B are respectively a clock of the Δ Σ-type AD converter 200, a reset pulse used to reset an integrator 202 of the Δ Σ-type AD converter 200 and an address signal used to specify a pixel to be connected to the Δ Σ-type AD converter 200.

The pixel reset circuit should adopt a structure similar to that adopted in, for instance, the image sensor in the related art disclosed in Japanese Laid Open Patent Publication No. H09-046596 and since the structure of the pixel reset circuit does not bear any direct relevance to the operation of the present invention, the pixel reset circuit is not shown in FIG. 2A. In addition, while the outputs of the pixels 1, 2, ... are each connected to the AD converter 200 via a single switch 1a, 2a, ... in FIG. 2A to simplify the explanation, a given arbitrary pixel output may be selectively connected to the AD converter via a plurality of switches. In FIG. 2, reference numerals 1b, 2b, ... and reference numerals 1c, 2c, ... at the individual pixels 1, 2, ... respectively indicate photoelectric conversion units and source followers used in a pixel value read.

In the embodiment, the converter used to convert pixel outputs is constituted as a Δ Σ-type AD converter. FIGS. 1 and 2A present an example of a structure that may be adopted in the Δ Σ-type AD converter 200. The Δ Σ-type AD converter 200 includes an adder 201, an integrator 202, a comparator 203 and a latch 204.

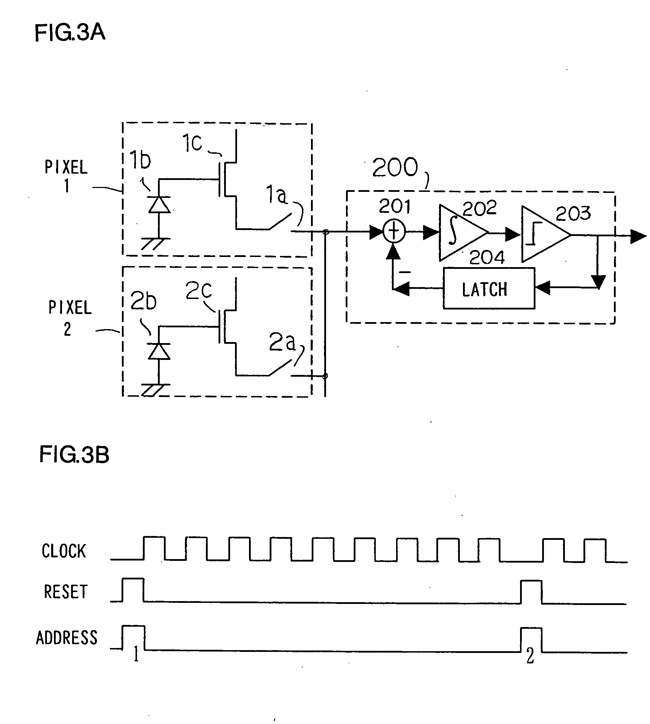

The use of a Δ Σ-type AD converter to convert pixel outputs at an image sensor has been disclosed in, for instance, "A Low-Power, Low-Noise Ultra Wide-Dynamic-Range CMOS Imager With Pixel-Parallel A/D Conversion" (by Lisa G. McIlrath, IEEE Journal of Solid-State Circuits, vol. ssc-36 No. 5, May 2001) . FIGS. 3A and 3B show the circuit structure adopted in such a Δ Σ-type AD converter and the operation of the Δ Σ-type AD converter. In this example, the Δ Σ-type AD converter 200 is utilized to read the output from a single pixel.

The operation of the image sensor shown in FIG. 3A is now explained. First, the integrator 202 constituting part of the Δ Σ-type AD converter 200 is reset. In addition, an address (1) of the pixel, the output of which is to be read, is generated and the output of the pixel 1 is connected to the Δ Σ-type AD converter 200. As a result, the output of the pixel 1 is added to an inverted output of the latch 204 by the adder 201, and the results from the addition are integrated at the integrator 202. Next, the results of the integration executed by the integrator 202 are compared with a predetermined value at the comparator 203, and the output from the comparator 203 is latched by the latch 204 each time the clock is input. As described above, the output of a single pixel is read out at the Δ Σ-type AD converter 200 shown in FIG. 3A in correspondence to a plurality of clocks. Before reading out the output of the next pixel (2), the integrator 202 is reset and then the output of the pixel 2 is connected to the Δ Σ-type AD converter 200.

The operation of the image sensor achieved in the first embodiment in FIG. 2B and the operation of the image sensor in the related art in FIG. 3B differ from each other only in the results of the address generation by the address generation circuit 300. In the image sensor in the related art shown in FIG. 3A, the Δ Σ-type AD converter 200 is reset every time the output of a given pixel is read out. In the image sensor achieved in the first embodiment in FIG. 2A, on the other hand, a plurality of addresses 1 to 9 are generated after resetting the Δ Σ-type AD converter 200 and the outputs of the plurality of corresponding pixels are sequentially connected to the Δ Σ-type AD converter 200.

When the plurality of pixels, the outputs of which are read out after resetting the Δ Σ-type AD converter 200 in the first embodiment in FIGS. 2A and 2B, are adj acent to one another, these pixel outputs can be assumed to have a close correlation, indicating output values substantially equal to one another. As a result, when the outputs are read out as in the first embodiment shown in FIG. 2B, the average value of the outputs from the pixels 1 to 9 is digitized and output.

The output of each pixel at an image sensor contains random noise such as shot noise, and the signal/noise (SN) ratio and the limit to the level of sensitivity that can be achieved are determined by such noise. It is to be noted with particular interest that when the pixels are miniaturized, the signal components are reduced to result in a lowered SN ratio and poorer sensitivity. When the signals are read out as in the image sensor in the related art shown in FIG. 3B, the signal at the pixel 1 is read out together with noise, and thus, neither the SN ratio nor the sensitivity can be improved.

In contrast, by reading out signals as in the first embodiment shown in FIG. 2B, the average of the signals at the individual pixels 1 through 9 and the noise is read out. Since there is a close correlation among the signal component values among the individual pixels, their average does not differ greatly from the individual signal component values. At the same time, since the noise component is random, the noise value is lowered through averaging. Thus, when the signals are read out, as in the first embodiment shown in FIG. 2B, the SN ratio and the sensitivity are improved in a manner similar to that through which the SN ratio and the sensitivity would be improved by coupling the pixels 1 through 9. In addition, since the average among 9 pixels is read out, the gradation of the output value improves by more than 3 bits (= log (9)/log (2)) in this example.

As described above, a Δ Σ-type AD converter is used as the AD converter 200, addresses of a plurality of adjacent pixels are generated during a single reset cycle over which the integrator 202 of the Δ Σ-type AD converter 200 is reset once and the outputs of the plurality of corresponding pixels are sequentially connected to the Δ Σ-type AD converter 200 in the first embodiment. As a result, the sensitivity, the noise performance and the gradation performance are all improved to allow the image sensor to be used in an application such as display that requires high sensitivity and high gradation.

This means that the Δ Σ-type AD converter in the first embodiment executes over-sampling of outputs from a plurality of pixels during a single reset cycle, i.e., executes over-sampling on a spatial axis as opposed to the over-sampling executed by the Δ Σ-type AD converter in the related art, which over-samples the output of a single pixel among a plurality of clocks during a single reset cycle, i.e., which executes over-sampling on a time axis. Accordingly, the first embodiment may be considered to achieve improvements in the sensitivity and the gradation performance through such over-sampling.

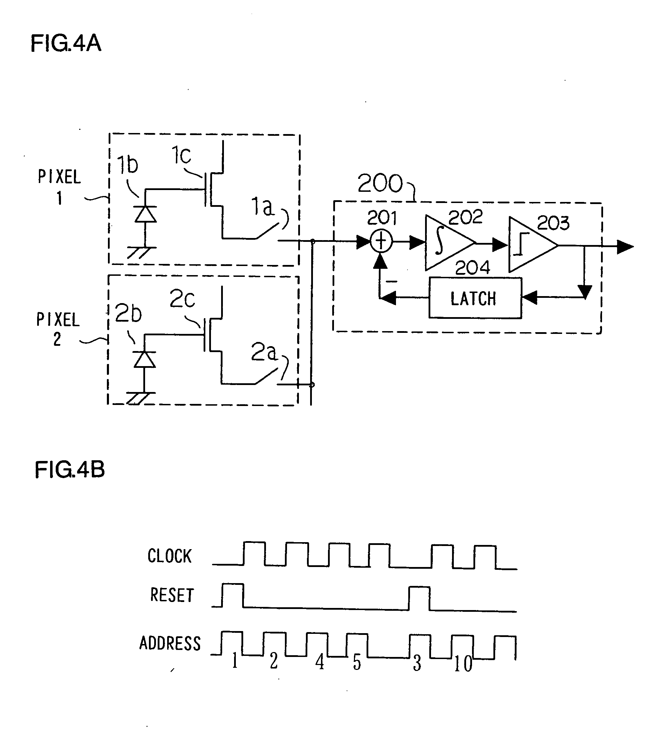

In addition, by reducing the number of pixels accessed during a single reset cycle and reducing a period of the single reset cycle in the structure used in the first embodiments, the image sensor can also be adopted in an application such as detection of a high-speed movement that requires high speed performance and a high level of spatial resolution. FIGS. 4A and 4B present an example of such an application. It is to be noted that FIG. 4A does not include an illustration of the address generation circuit 300. In the example presented in FIG. 4B, only four pixels are accessed during a single reset cycle. As a result, the data read speed can be increased by a factor of 9/4 compared to the data read speed achieved in the image sensor shown in FIG. 2 by using the same clock. A maximum read speed can be achieved by accessing a single pixel with a clock during a single reset cycle.

It is to be noted that the reset signal generation circuit 400 can change a reset cycle (period) according to usage conditions of and/or performance requirements for the image sensor. The reset signal generation circuit 400 is constituted of a controller or the like and can change the period of a reset cycle freely by the software.

In other words, the various performance requirements such as speed, high sensitivity, low noise and high gradation are satisfied in a flexible manner in the first embodiment by executing over-sampling on a spatial axis and adjusting the spatial over-sampling rate. As a result, even when the image capturing conditions change significantly, which is likely to happen in, for instance, an automotive application, the various aspects of the image sensor performance can be adjusted in a flexible manner and, for this reason, the image processing image sensor can also be used as a display image sensor to achieve a cost reduction for the entire system.

In addition, while the outputs of the individual pixels are stored in a frame memory and pixels are coupled in the frame memory in order to adjust the various aspects of the image sensor performance in a flexible manner in the related art, equivalent advantages can be achieved by adopting the structure of the present invention without having to use an expensive frame memory.

It is to be noted that the output of the comparator 203 is input to a control circuit 500 as bit string data. The control circuit 500 latches the output of the comparator 203 synchronously with clocks to obtain the bit string data. The control circuit 500 performs a specific control and/or calculates a voltage value based upon the obtained bit string data. The control circuit 500 may be constituted of a microprocessor or the like. The input portion of the control circuit 500 may include a shift register to take in the bit string data.

### (Second Embodiment of the Invention)

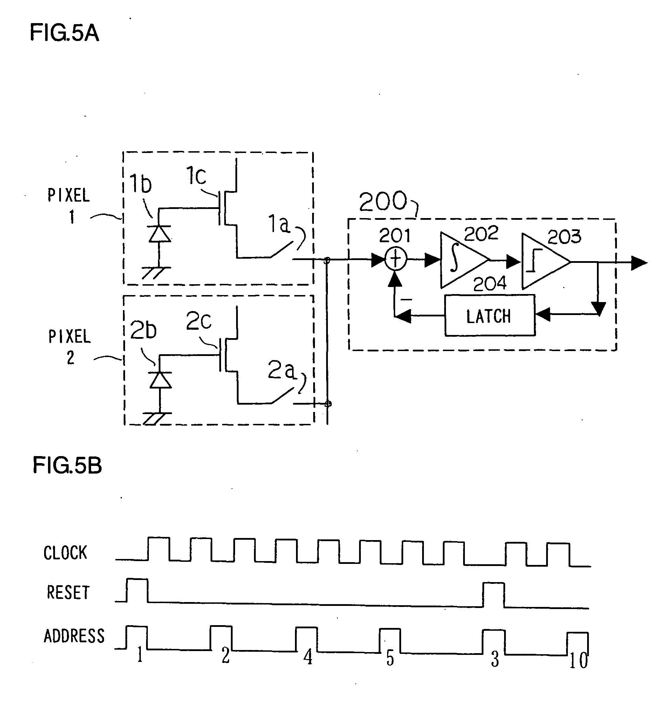

FIGS. 5A and 5B show the structure and the operation achieved in the second embodiment. It is to be noted that FIG. 5A does not include an illustration of the address generation circuit 300. In the second embodiment, four pixels are coupled so as to allow them to be handled as a single integratedpixel, as in the operation shown in FIG. 4B. However, while an address is generated in synchronization with the clock and a single address is generated in correspondence to a given clock in the example presented in FIG. 4B, one address is generated in correspondence to two clocks in the second embodiment shown in FIG. 5B. The second embodiment enables over-sampling on the spatial axis and over-sampling on the time axis to be executed simultaneously to achieve even more flexible adjustment of the read speed and the gradation.

### (Third Embodiment of the Invention)

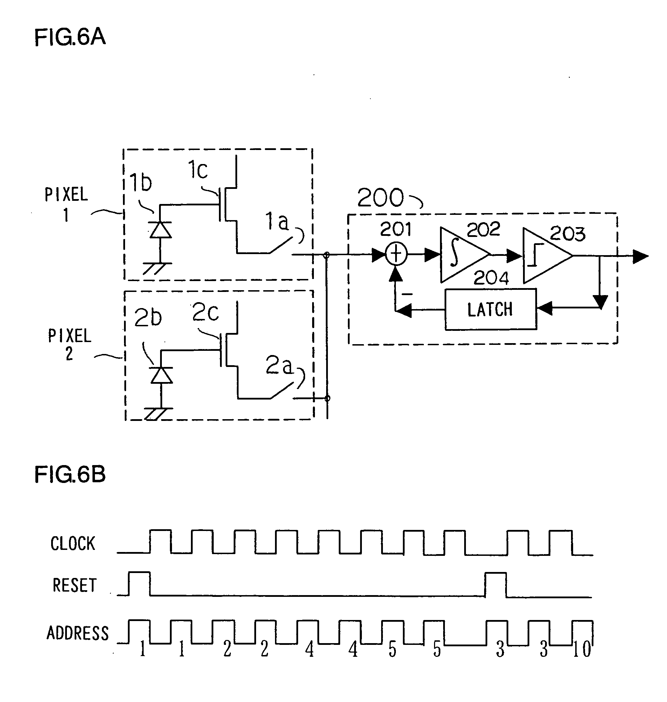

FIGS. 6A and 6B show the structure and the operation achieved in the third embodiment. It is to be noted that FIG. 6A does not include an illustration of the address generation circuit 300. In the third embodiment, a given address is generated in correspondence to each of a plurality of successive clocks to enable over-sampling on the spatial axis and over-sampling on the time axis to be executed simultaneously, as in the second embodiment shown in FIG. 5B. In addition, it is ensured that an address is generated in correspondence to each clock without fail. While it is necessary in the second embodiment shown in FIG. 5B to switch the mode to generate a single address in correspondence to one clock or to generate an address in correspondence to two clocks, the settings of the read speed and gradation can be achieved entirely through the address generation circuit 300 by adopting the operation shown in FIG. 6B to eliminate the need for problematic mode switching. Since addresses can be generated in the software, e.g., by the controller, the flexibility of the circuit is improved by adopting the structure shown in FIGS. 6A and 6B.

### (Fourth Embodiment of the Invention)

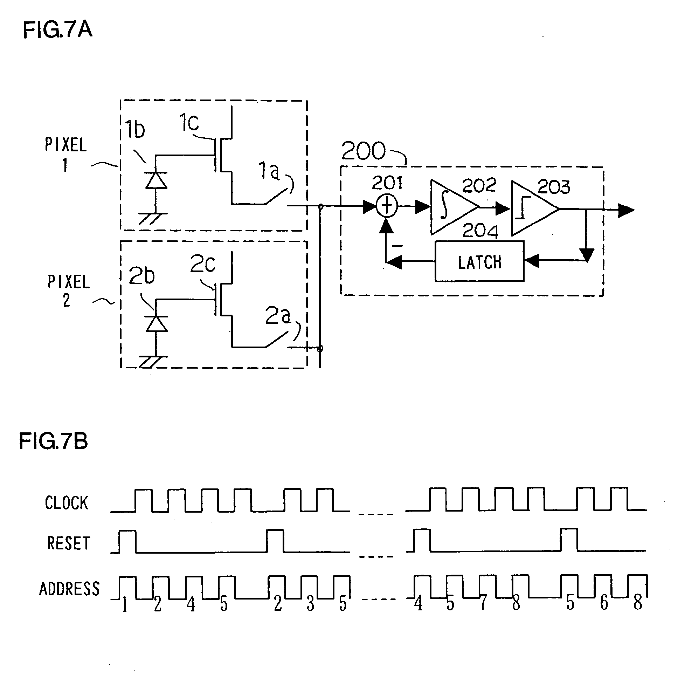

FIGS. 7A and 7B show the structure and the operation achieved in the fourth embodiment. It is to be noted that FIG. 7A does not include an illustration of the address generation circuit 300. In the fourth embodiment, four pixels are coupled, as in the operation shown in FIG. 4B. However, each pixel is accessed a plurality of times for a single frame and the pixels are coupled in different coupling patterns in the fourth embodiment shown in FIG. 7B. As a result, the sensitivity and the gradation can be improved while sustaining the spatial resolution at a constant level.

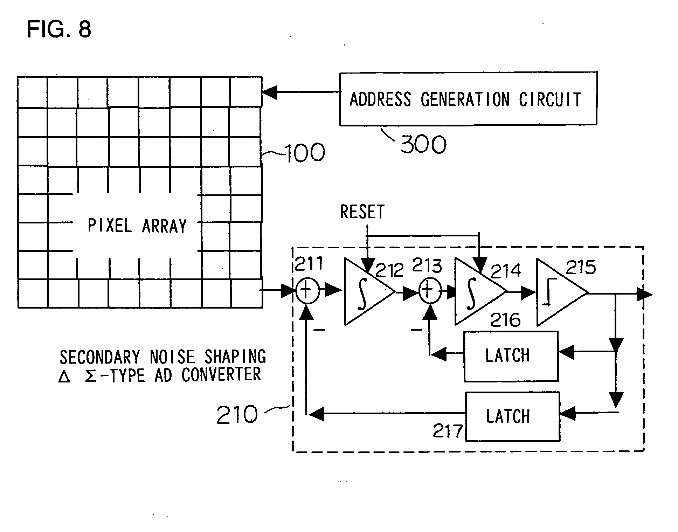

While the Δ Σ-type AD converter 200, which includes a simple primary integrator 202, is used in the first through fourth embodiments described above, a Δ Σ-type AD converter other than this may be used instead. For instance, a Δ Σ-type AD converter 210 constituted with secondary integrators 212 and 214, as shown in FIG. 8, may be used.

As described above, in the image sensor achieved in the embodiments described above, the outputs of the individual pixels at the image sensor are connected to a common Δ Σ-type AD converter and addresses that will allow a plurality of adjacent pixels to be sequentially accessed are generated during a single cycle for resetting the integrator at the Δ Σ-type AD converter. As a result, the average of the outputs from the plurality of pixels is read out to achieve improvements in the sensitivity and the gradation, and, at the same time, it becomes possible to freely alter the pixel coupling pattern in correspondence to the addresses set for the read. Thus, both the requirements for the read speed and the requirements for the sensitivity/gradation are satisfied in the image sensor tomeet the requirements of a specific application, and a single common image sensor can be utilized to function as the image sensor for image processing and the image sensor for display .

The address generation circuit 300 can freely alter the address pattern at reading, i.e. the pixel coupling pattern, according to usage conditions and/or required performances of the image sensor. The usage conditions of the image sensor are determined according to how the image sensor is used in a certain application. For example, in the application on a motor vehicle (car) , the usage conditions correspond to the usage in a system that quickly detects an obstacle and issues an alarm, the usage in a system that needs to detect a white line on the road from a distance at night, or the like.

These usages correspond to usages as the image sensor for image processing. There are also usages as the image sensor for display in order to display a captured image on a monitor.

The required performances correspond to performances required for the above usages. The required performances correspond to the spatial resolution, the sensitivity, the read speed, the gradation performance, the low noise performance and the like.

Furthermore, since one address is generated without fail in correspondence to one clock at the Δ Σ-type AD converter, the settings for the read speed, the sensitivity and the gradation can all be entrusted to the address generation circuit in the image sensor achieved in the embodiment. Thus, by generating addresses in the software, e.g., by the controller, the circuit flexibility can be further improved.

Moreover, an address for each pixel is generated a plurality of times through different address generation patterns over a single frame, by repeating a plurality of address generation patterns through each of which addresses corresponding to a plurality of adjacent pixels are sequentially generated, in the image sensor achieved in the embodiment. Consequently, a given pixel is coupled with other pixels which are adjacent to it through a plurality of different patterns to result in improvements in the sensitivity and the gradation while sustaining the spatial resolution at a desirable level.

The above described embodiments are examples, and various modifications can be made without departing from the spirit and scope of the invention.

The disclosures of the following priority application are herein incorporated by reference:
Japanese Patent Application No. 2003-143648 filed May 21, 2003.

## Claims

1. An image sensor comprising:
a plurality of pixels arranged in a two-dimensional pattern;
a Δ Σ-type AD converter provided to be commonly used in conjunction with the pixels, that executes AD conversion of outputs of the pixels;
an address generation means for generating address signals used to specify the pixels; and
a plurality of switching means, each provided in conjunction with one of the pixels, for connecting the output of the pixel to the Δ Σ-type AD converter in conformance to an address signal provided by the address generation means,
wherein:
the address generation means sequentially generates addresses in correspondence to a plurality of adjacent pixels during a reset cycle over which an integrator of the Δ Σ-type AD converter is reset once; and
the outputs of the pixels corresponding to the addresses generated by the address generation means are sequentially input the Δ Σ-type AD converter via the plurality of switching means.

2. An image sensor according to claim 1, wherein:
the address generation means operates synchronously with clocks at the Δ Σ-type AD converter and generates one address signal in correspondence to a single clock.

3. An image sensor according to any one of claims 1 through 2, wherein:
the address generation means generates an address for each pixel a plurality of times by using different address generation patterns over a single frame by repeating address generation patterns through which addresses for the plurality of adjacent pixels are generated sequentially.

4. An image sensor according to any one of claims 1 through 3, wherein:
the address generation means alters an address generation pattern through which addresses for the plurality of adjacent pixels are generated sequentially, according to a performance required for the image sensor.

5. An image sensor according to any one of claims 1 through 4, further comprising:
a reset signal generation means that generates a reset signal which resets the integrator of the Δ Σ-type AD converter,
wherein:
the reset signal generation means alters a period of a cycle of the reset signal according to a performance required for the image sensor.
